# EUROPEAN PATENT APPLICATION

(11) **EP 4 603 364 A1**
(43) Date of publication of application: **20.08.2025**
(21) Application number: 24157524.0
(22) Date of filing: 14.02.2024
(51) Int. Cl.: B62D 5/04

(54) **MOTOR-ASSISTED ADJUSTMENT OF VEHICLE STEERING SYSTEM FEEDBACK**

(71) Applicant: VOLVO TRUCK CORPORATION, 405 08 Göteborg (SE)
(72) Inventor: ÖSTMAN, Bill, 436 57 HOVÅS (SE); LJUNGBERG, Marcus, 436 53 GÖTEBORG (SE)
(74) Representative: Kransell & Wennborg KB

(57) **Abstract**

A computer system includes processing circuitry configured to obtain motor angle and estimate motor toque of an electric motor of a steering system of a vehicle in motion, determine a relationship between the estimated motor torque and the obtained motor angle, estimate a steering lash level by comparing the determined relationship to predetermined relationships indicative of lash level, and modify motor torque based on the estimated steering lash level to adjust steering feedback supplied by the electric motor to a steering wheel of the vehicle. Adjustment of steering feedback responsive to the estimated steering lash level permits torque build-up to a driver of a vehicle to be applied independent of steering lash.

## Description

### TECHNICAL FIELD

The disclosure relates generally to vehicle steering systems. In a particular aspect, the disclosure relates to motor-assisted adjustment of vehicle steering system feedback. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle steering systems permit a driver to control the direction of travel of a vehicle with a steering wheel that is coupled to a steering system that controls directionality of wheels of the vehicle. Recirculating-ball type steering systems are frequently used with heavy-duty vehicles. To reduce driver effort in overcoming forces that arise in effectuating changes in wheel angle, vehicles are commonly equipped with power-assisted steering that reduces the force required for a driver to change the wheel angle and thereby the direction of travel of the vehicle. Assisting forces may be provided with various types of actuators, including hydraulic and electric actuators.

Hydraulic power-assisted steering systems have been implemented for decades. A common type of hydraulic power-assisted steering system is a recirculating-ball steering system. Such systems need to be adapted to each front axle load and tire width (which vary according to different engine alternatives, even within the same vehicle model), but are difficult to tune (i.e., adjust finely) to provide a desired level of assistance at different vehicle speeds in combination while providing satisfactory steering feel. More recently, electrically operated actuators have been used, either in conjunction with a hydraulic power assisted steering system (e.g., in the form of a torque overlay system in which a motor is coupled to a hydraulic vehicle steering apparatus), or to replace hydraulic systems altogether.

Modern vehicles lack the ability to detect steering lash or provide countermeasures. Steering lash (wherein "lash" is sometimes also called backlash or play) is a clearance or lost motion in a steering mechanism caused by gaps between parts. Gaps between parts such as gears can change with time due to mechanical wear. Steering lash can be defined as the maximum distance or angle through which a part of the steering system may be moved in one direction without appreciable force or motion to the next part in mechanical sequence. Steering lash may develop slowly and can result in a less controllable vehicle, thereby compromising safety. Different drivers react differently to steering lash, such that an unexpected variation in steering lash when a driver changes vehicles may render it challenging for the driver to consistently predict how much steering input is required to provide a desired change in vehicle direction.

It would be desirable to address steering lash in order to reduce challenges in driving vehicles and improve vehicle safety.

### SUMMARY

Aspects of the present disclosure involve determination of a relationship between motor angle and motor torque of an electric motor of a vehicle steering system to estimate a steering lash level, and modification of motor torque based on the estimated steering lash level to adjust steering feedback supplied by the electric motor to a steering wheel of the vehicle.

According to a first aspect of the disclosure, a computer system comprises processing circuity configured to obtain motor angle and estimate motor torque of an electric motor of a steering system of a vehicle in motion; determine a relationship between the estimated motor torque and the obtained motor angle; estimate a steering lash level by comparing the determined relationship to predetermined relationships indicative of lash level; and modify motor torque based on the estimated steering lash level to adjust steering feedback supplied by the electric motor to a steering wheel of the vehicle. The first aspect of the disclosure may seek to overcome a challenge experienced by a driver in determining how much steering input is required to provide a desired change in vehicle direction. A technical benefit may include providing a driver of a vehicle with steering feel that correlates to how one or more steered external wheels of the vehicle are moving.

Optionally, in some examples, including in at least one preferred example, the determined relationship comprises a determined hysteresis relationship between the estimated motor torque and the obtained motor angle, and the predetermined relationships indicative of lash level comprise a predetermined high-lash hysteresis relationship and a predetermined low-lash hysteresis relationship.

Optionally, in some examples, including in at least one preferred example, the comparing of the determined relationship to predetermined relationships indicative of lash level comprises utilizing regression analysis to assign a numerical value indicative of steering lash level corresponding to the determined relationship.

Optionally, in some examples, including in at least one preferred example, the processing circuitry is configured to estimate motor torque by sensing electric current supplied to the electric motor.

Optionally, in some examples, including in at least one preferred example, the predetermined relationships indicative of lash level are derived from data obtained from multiple other vehicles.

Optionally, in some examples, including in at least one preferred example, the processing circuitry is further configured to: obtain a speed of the vehicle; compare the obtained speed of the vehicle to a predetermined threshold value; and adjust motor torque to adjust steering feedback supplied by the electric motor only in the event that the obtained speed of the vehicle exceeds the predetermined threshold value.

Optionally, in some examples, including in at least one preferred example, the vehicle steering system comprises a torque overlay system in which the electric motor is coupled to a hydraulic vehicle steering apparatus.

Optionally, in some examples, including in at least one preferred example, the processing circuitry is configured to determine the relationship between the estimated motor torque and the obtained motor angle for motor angles within a range not exceeding negative 15 degrees to positive 15 degrees.

Optionally, in some examples, including in at least one preferred example, the processing circuitry is configured to adjust steering feedback supplied by the electric motor to the steering wheel of the vehicle by reducing torque applied by the electric motor to the steering wheel.

Optionally, in some examples, including in at least one preferred example, the processing circuitry utilizes a model-based closed loop steering feedback control scheme to adjust steering feedback supplied by the electric motor to the steering wheel of the vehicle.

Optionally, in some examples, including in at least one preferred example, a vehicle comprises a computer system as disclosed herein.

According to a second aspect of the disclosure, a computer-implemented method comprises: obtaining, by processing circuitry of a computer system, motor angle and estimating, by the processing circuitry, motor torque of an electric motor of a steering system of a vehicle in motion; determining, by the processing circuitry, a relationship between the estimated motor torque and the obtained motor angle; estimating, by the processing circuitry, a steering lash level by comparing the determined relationship to predetermined relationships indicative of lash level; and modifying, by the processing circuitry, motor torque based on the estimated steering lash level to adjust steering feedback supplied by the electric motor to a steering wheel of the vehicle. The second aspect of the disclosure may seek to overcome a challenge experienced by a driver in determining how much steering input is required to provide a desired change in vehicle direction. A technical benefit may include providing a driver of a vehicle with steering feel that correlates to how one or more steered external wheels of the vehicle are moving.

Optionally, in some examples, including in at least one preferred example, a computer program product comprises program code for performing, when executed by the processing circuitry, the computer-implemented method.

Optionally, in some examples, including in at least one preferred example, a non-transitory computer-readable storage medium comprises instructions, which when executed by processing circuitry, cause the processing circuitry to perform the computer-implemented method.

According to a third aspect of the disclosure, a steering system for a vehicle is provided, the steering system comprising: a steering actuator comprising an electric motor; one or more sensors configured to sense motor angle and to permit estimation of motor torque of the vehicle in motion; and a steering control unit, wherein the steering control unit is configured to: determine a relationship between the estimated motor torque and the sensed motor angle; estimate steering lash level by comparing the determined relationship to predetermined relationships indicative of lash level; and modify motor torque based on the estimated steering lash level to adjust steering feedback supplied by the electric motor to a steering wheel of the vehicle. The third aspect of the disclosure may seek to overcome a challenge experienced by a driver in determining how much steering input is required to provide a desired change in vehicle direction. A technical benefit may include providing a driver of a vehicle with steering feel that correlates to how one or more steered external wheels of the vehicle are moving.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is schematic, side elevational view of an exemplary vehicle that includes a steering system having a steering actuator, sensors, and a steering control unit according to an example.
**FIG. 2** is a flowchart identifying elements of a method for adjusting feedback of a vehicle steering system utilizing a motor according to an example.
**FIG. 3** is a flowchart identifying elements of another method for adjusting feedback of a vehicle steering system utilizing a motor according to an example.
**FIG. 4** is an exemplary system diagram of a system for adjusting feedback of a vehicle steering system utilizing a motor, including a steering control unit configured to communicate with the vehicle steering system, according to an example.
**FIG. 5** provides plots of steering wheel torque versus steering wheel angle for a steering system without lash compensation, and a steering system with lash compensation as disclosed herein.
**FIG. 6A** is a plot of motor torque versus motor angle for a first (i.e., high, worst case) steering lash condition according to an example.
**FIG. 6B** is a plot of motor torque versus motor angle for a second (i.e., low, best case) steering lash condition according to an example.
**FIG. 6C** is a plot of motor torque versus motor angle for a third (i.e., stock) steering lash condition according to an example.
**FIG. 7** is a bar graph of Kₘₒₜₒᵣ numerical values (embodying a relation of stiffness of steering motor torque to steering motor angle in Newton-meters per degree) obtained by linear regression analysis from the data plotted **FIGS. 6B, 6C,** and **6A** (from left to right), respectively, with an associated table providing a numerical values for each plotted bar in the graph, according to an example.
FIG. 8 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Aspects of the present disclosure involve determination of a relationship between motor angle and motor torque of an electric motor of a vehicle steering system to estimate a steering lash level, and modification of motor torque based on the estimated steering lash level to adjust steering feedback supplied by the electric motor to a steering wheel of the vehicle. The adjusted steering feedback provides steering feel that correlates to how one or more steered external wheels of a vehicle are moving. Adjustment of steering feedback responsive to the extracted steering lash level permits torque build-up to a driver of a vehicle to be applied independent of steering lash.

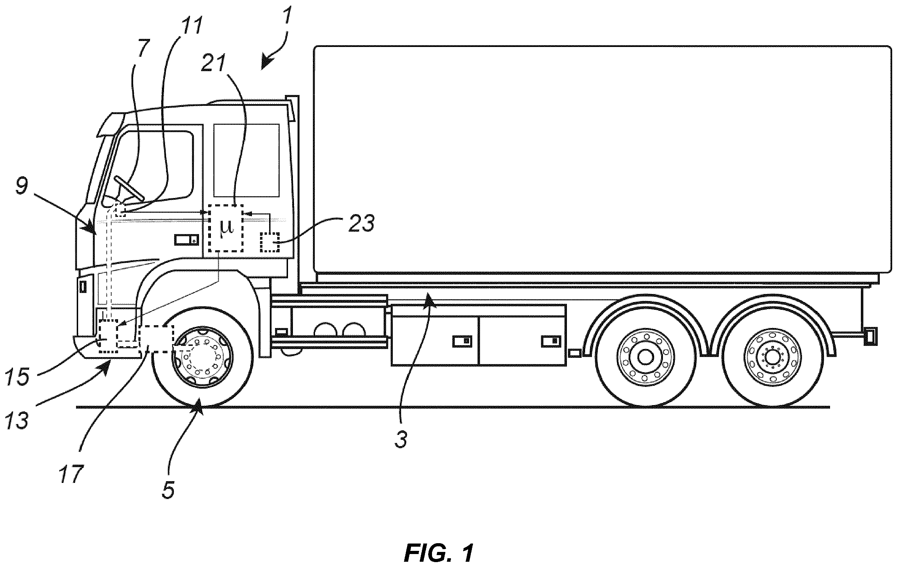

**FIG. 1** schematically shows a vehicle, here in the form of a truck 1, comprising a body 3 and at least one steerable (external) vehicle wheel 5 rotatably connected to the vehicle body 3, a steering input device embodied in a steering wheel 7, and a steering system 9. The steering system 9 comprises a steering request detector 11, a steering actuator 13 for acting on the steerable front wheels 5, and a steering control unit 21.

In some examples such as shown in **FIG. 1****,** the steering actuator 13 comprises a first actuator in the form of an electric motor 15 and a second actuator in the form of a hydraulic steering apparatus such as a hydraulic steering gear 17. In this regard, the steering actuator 13 may comprise a torque overlay system with the electric motor 15 being coupled to the hydraulic steering gear 17, and being intermediately arranged between the hydraulic steering gear 17 and the steering wheel 7. In some examples, the electric motor 15 twists a torsion rod (not shown) in the hydraulic steering gear 17. The more the torsion rod is twisted by the electric motor 15, the more a hydraulic valve (not shown) of the hydraulic steering gear 17 is opened, which increases hydraulic assistance provided by the hydraulic steering gear 17 to act on the steerable front wheels 5. Steering systems utilizing a hydraulic steering gear with a torsion rod and a hydraulic valve, and augmented with an electric motor, are known in the art. In some examples, the steering system 9 may include the electric motor 15 but be devoid of a hydraulic steering apparatus.

As is schematically illustrated in **FIG. 1****,** the steering control unit 21 is connected to the steering request detector 11, the electric motor 15, and sensors 23. The sensors 23 may be spread throughout the truck, and provide information to the steering control unit 21 concerning vehicle operation and/or ambient conditions. In some examples, the sensors 23 may comprise any one or more of vehicle speed sensors, lane departure detection sensors, blind spot detection sensors, obstacle detection sensors, and the like.

Based on signals from the steering request detector 11 and the external sensors 23, the steering control unit 21 controls the electric motor 15 to activate the hydraulic steering gear 17 as described above. In some examples, the steering control unit 21 may additionally receive signals from lane detecting sensors 23, and control the electric motor 15 additionally based on such signals. In some examples, the control of the electric motor 15 by the steering control unit 21 may additionally be based on a predetermined vehicle model, which may have been previously established based on, for example, simulations and tests.

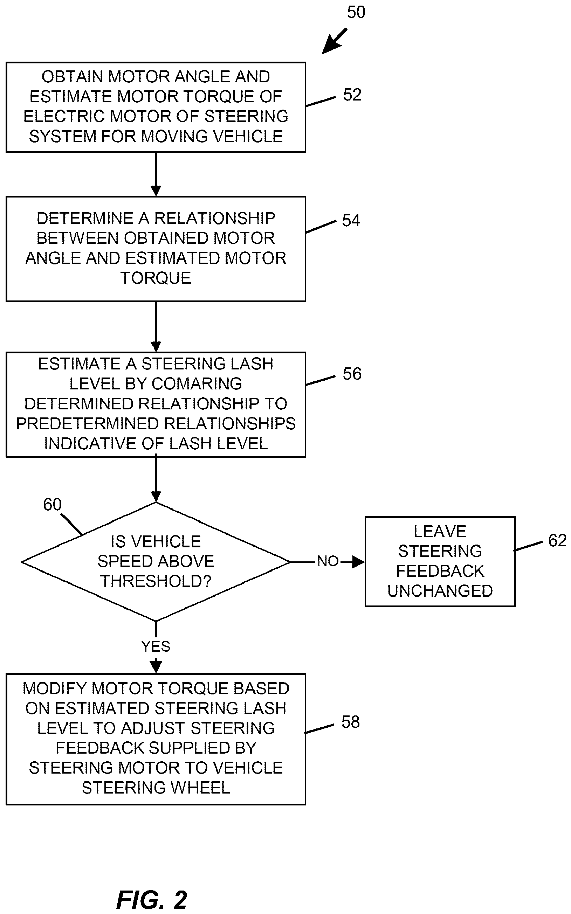

**FIG. 2** is a flowchart illustrating steps of an exemplary method 50 for adjusting feedback of a vehicle steering system utilizing a motor. In some examples, various steps of the method 50 may be performed by the steering control unit 21 (which may include or be embodied in a computer system as described herein) in conjunction with one or more sensors 23 and the steering system 13 including the electric motor 15, all as described in connection with **FIG. 1****.**

Referring to **FIG. 2****,** one step of the method 50 includes obtaining motor angle and estimating motor torque of an electric motor of a steering system of a moving vehicle, according to block 52. In some examples, the steering motor angle and steering motor torque may be obtained and/or estimated by one or more sensors integrated with the electric motor 15 (shown in **FIG. 1****).** Another step of the method 50 includes determining a relationship between the obtained motor angle and estimated motor torque, according to block 54. In some examples, an angle/torque relationship is determined over a sustained period of time, such as on a substantially continuous basis (e.g., while a vehicle is in motion, optionally within a predetermined range of speeds). In some examples, an angle/torque relationship is determined while specified conditions are satisfied, such as while a vehicle is in motion (optionally within a predetermined range of speeds) and/or while motor angles are within a specified range, such as within one or more of the following angular ranges: ±30 degrees, ±25 degrees, ±20 degrees, ±15 degrees, ±12 degrees, ±10 degrees, ±8 degrees, or ±5 degrees. In some examples, a determined angle/torque relationship comprises a hysteresis relationship. In some examples, a hysteresis relationship may be determined according to steps including logging instantaneous motor angle and motor torque values, and plotting these values over time.

Further steps of the method 50 depicted in the flowchart of **FIG. 2** include comparing the determined angle/torque relationship to predetermined relationships indicative of lash level, and estimating a steering lash level, according to block 56. In some examples, the predetermined relationships indicative of lash level include a high-lash hysteresis relationship and a low-lash hysteresis relationship, wherein high-lash hysteresis relationship is characterized by less angular motion (less change in motor angle) for a specified motor torque value, while a low-lash hysteresis relationship is characterized by relatively more angular motion for a specified motor torque value. The predetermined relationships indicative of lash level may be stored in memory of a steering control unit. In some examples, predetermined high-lash and low-lash hysteresis relationships may be determined by a vehicle manufacturer for a particular vehicle model (optionally adjusted to account for age of a vehicle or a steering system thereof), and in some examples these predetermined high-lash and low-lash hysteresis relationships may be periodically updated by saving new relationship values to memory of a steering control unit. For example, collective data from many vehicles of the same model may be used to produce and periodically update predetermined high-lash and low-lash hysteresis relationships stored in memory of a steering control unit. Such updating may occur wirelessly (e.g., via a cellular phone connection, a WiFi or WiMax connection, a Bluetooth^{®} connection, or the like).

According to block 58, motor torque is modified based on the estimated steering lash level (determined in block 56) to adjust steering feedback supplied by the motor to the steering wheel of the vehicle, thereby providing lash compensation utility (e.g., by causing torque build-up to start after the lash). In some examples, an estimated lash level determined in block 56 may be used to adjust steering feedback supplied by the steering motor to the vehicle steering wheel (e.g., according to block 58) immediately after the estimated lash level is determined (without utilization of optional decision block 60 shown in **FIG. 2****).** In some examples, the adjustment of steering feedback is performed only when vehicle speed is above a specified threshold value (e.g., by comparing sensed vehicle speed to a threshold speed), according to decision block 60. In such an instance, if vehicle speed is not above the threshold value, then steering feedback may be left unchanged, according to block 62.

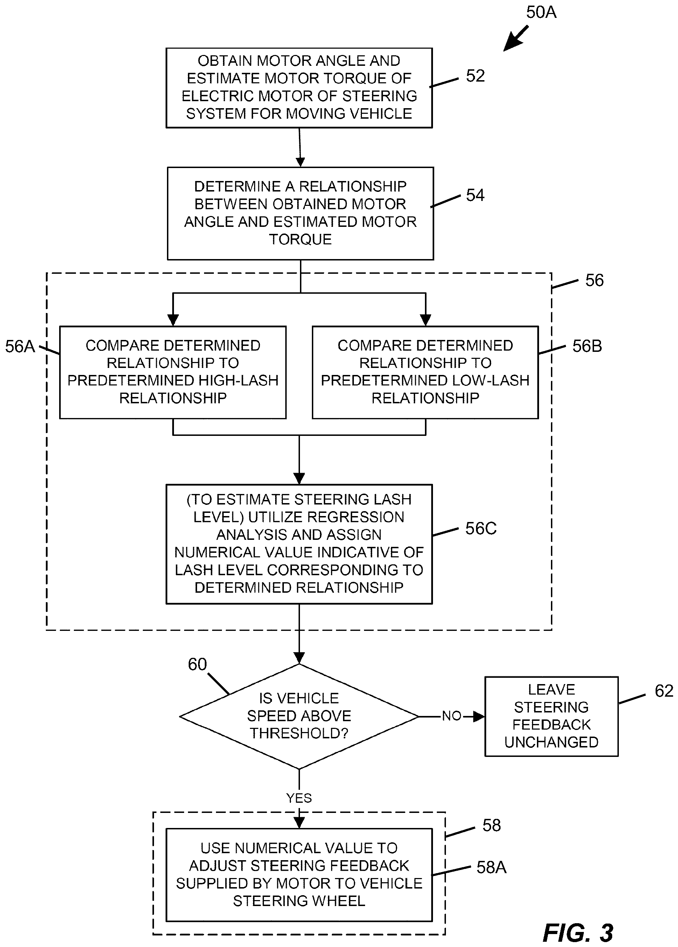

**FIG. 3** is a flowchart identifying elements of another method for adjusting feedback of a vehicle steering system utilizing a motor according to an example, with the first two steps thereof being the same as described in connection with **FIG. 2****.** Referring to **FIG. 3****,** one step of the method 50A includes obtaining motor angle and estimating motor torque of an electric motor of a steering system of a moving vehicle, according to block 52. Another step of the method 50A includes determining a relationship between the obtained motor angle and estimated motor torque, according to block 54. A further step of the method 50A includes comparing the determined angle/torque relationship to predetermined relationships indicative of lash level, and estimating a steering lash level, according to block 56.

Within block 56, sub-block 56A includes comparing the determined angle/torque relationship to a predetermined high-lash relationship (such as high-lash hysteresis relationship), and sub-block 56B includes comparing the determined angle/torque relationship to a predetermined low-lash relationship (such as low-lash hysteresis relationship). In some examples, the predetermined high-lash and low-lash hysteresis relationships may define worst-case and best-case scenarios, to provide a basis for indexing a sensed hysteresis (e.g., by assigning a numerical value thereto) and therefore determining the existing lash level of a vehicle to permit an appropriate level of steering feedback adjustment to be made. Thus, within block 56, a further sub-block 56C includes comparing the determined angle/torque relationship to the predetermined high lash hysteresis relationship and compared to the predetermined low lash hysteresis relationship, and utilizing regression analysis (e.g., linear regression or any other suitable regression type) to generate a numerical value indicative of lash level corresponding to the sensed hysteresis relationship.

In some examples, a potential lash range may be indexed based on a percentage scale, wherein a predetermined high lash (e.g., worst case scenario) hysteresis relationship may be assigned a 100 percent value, and a predetermined low lash (e.g., best case scenario) may be assigned a 0 percent value. However, any suitable numerical scale may be used in some examples. A numerical value may be represented as Kₘₒₜₒᵣ, embodying a relation of stiffness of steering motor torque to steering motor angle, in some examples. In some examples, the numerical value may embody a value between 0 and 100 (or 0 and 1), corresponding to a percentage correlation to (or between) the predetermined high lash and low lash hysteresis relationships.

A further step of the method 50A includes modifying motor torque based on the estimated steering lash level to adjust steering feedback according to block 58. As part of this steering feedback adjustment, in some examples sub-block 58A utilizes the numerical value determined in sub-block 56C (of block 56) to modify motor torque and adjust steering feedback supplied by the motor to the vehicle steering wheel, thereby providing lash compensation utility (e.g., by causing torque build-up to start after the lash).

In some examples, the numerical value indicative of lash level corresponding to the sensed hysteresis relationship generated in sub-block 56C may be used to adjust steering feedback supplied by the steering motor to the vehicle steering wheel (e.g., according to sub-block 58A) immediately after the numerical value is determined (i.e., without utilization of optional decision block 60). In some examples, the adjustment of steering feedback is performed only when vehicle speed is above a specified threshold value (e.g., by comparing sensed vehicle speed to a threshold speed), according to decision block 60. In such an instance, if vehicle speed is not above the threshold value, then steering feedback may be left unchanged, according to block 62.

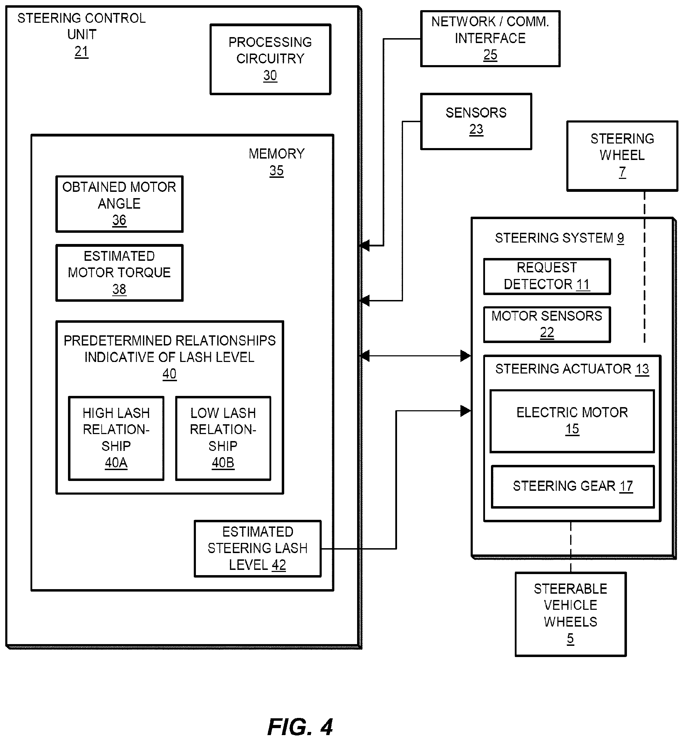

**FIG. 4** is an exemplary system diagram of a system for adjusting feedback of a vehicle steering system utilizing a motor, including a steering control unit 21 configured to communicate with the vehicle steering system 9, according to an example. Various items shown in **FIG. 4** correspond to like-numbered items shown and described in connection with **FIG. 1****.** As shown in **FIG. 4****,** the steering control unit 21 includes processing circuitry 30 and memory 35. Information and/or signals obtained by the steering control unit 21, as well as information and/or signals generated by the processing circuitry 30, may be stored in the memory 35. As shown, information including obtained motor angle 36, estimated motor torque 38, and predetermined relationships indicative of lash level 40 (e.g., high-lash relationship 40A and low-lash relationship 40B, which may include high-lash and low-lash hysteresis relationship) are stored in the memory 35, as is an estimated steering lash level 42 which may be calculated by the processing circuitry 30. The steering system 9 includes a steering actuator 13, which includes an electric motor and may include a hydraulic steering gear 17. The steering actuator 13 is intermediately arranged between steerable vehicle wheels 5 and a steering wheel 7. The steering system 9 may further include a request detector 11 that may receive steering request signals. The steering system 9 may additionally include motor sensors 22, which may include items such as a motor current sensor (which may be utilized to estimate motor torque) and a motor angle sensor (which may be utilized to detect motor angle), wherein signals form the motor sensors 22 may be used in determining a relationship between estimated motor torque and obtained motor angle. The steering control unit 21 may further receive signals from various sensors 23 (e.g., any one or more of vehicle speed sensors, lane departure detection sensors, blind spot detection sensors, obstacle detection sensors, and the like) and a network or communication interface 25 (e.g., to receive and/or update information concerning predetermined relationships indicative of lash level 40, storable in the memory 35 of the steering control unit 21).

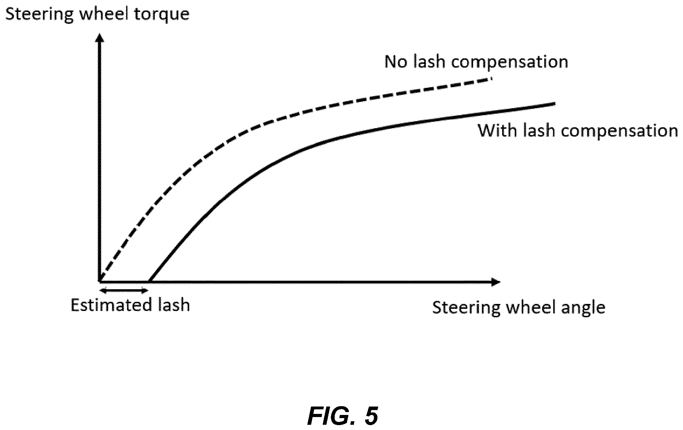

**FIG. 5** provides plots of steering wheel torque versus steering wheel angle for a steering system without lash compensation (in dashed line format), and a steering system with lash compensation (in solid line format) as disclosed herein. The lower left portion of **FIG. 5** shows that with lash compensation, steering wheel torque build-up will start only after the steering wheel is turned (angularly positioned) outside of the steering lash range. This provides the vehicle operator with improved steering feel, since steering wheel torque response is correlated to movement of the external steerable wheels of the vehicle, not solely to steering wheel movement.

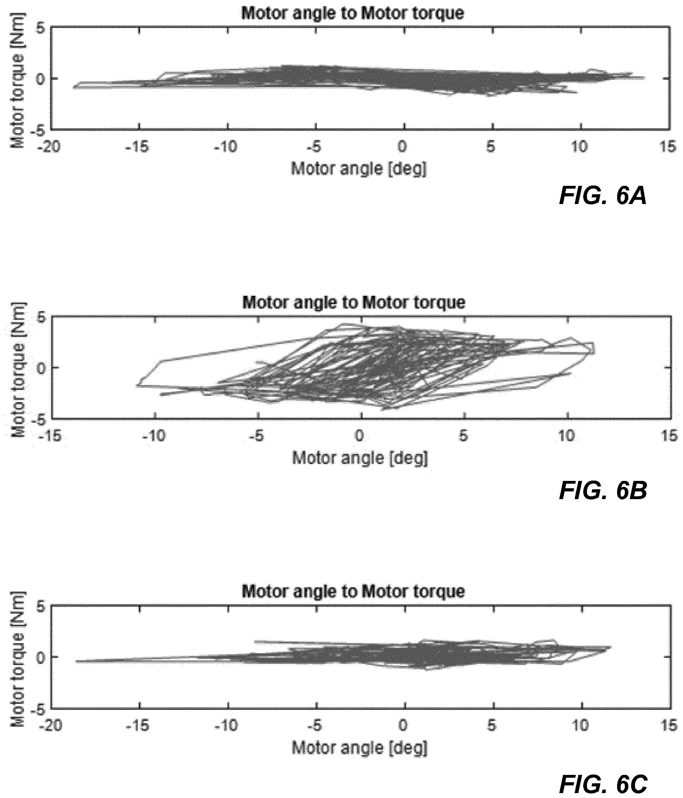

**FIGS. 6A-6C** provide plots of motor torque versus motor angle for different steering lash conditions. **FIG. 6A** is a plot of motor torque versus motor angle for a first (i.e., high, worst case) steering lash condition. **FIG. 6B** is a plot of motor torque versus motor angle for a second (i.e., low, best case) steering lash condition. **FIG. 6C** is a plot of motor torque versus motor angle for a third (i.e., stock) steering lash condition The plots were obtained with a truck towing a trailer at a speed of 90 km/hour.

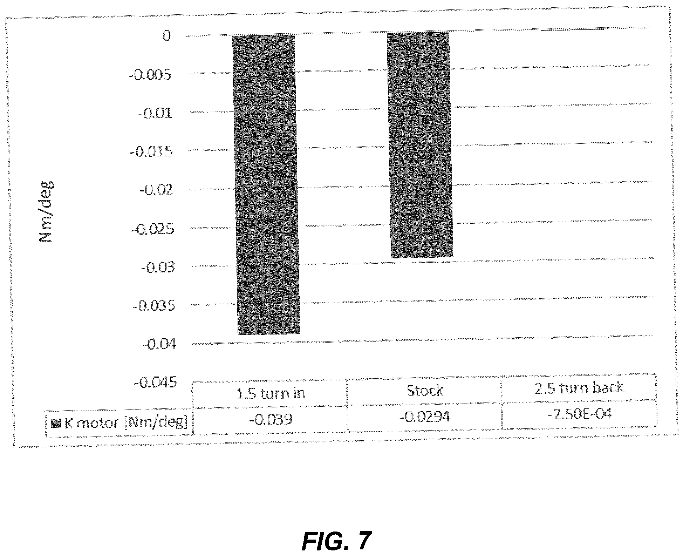

**FIG. 7** is a bar graph of Kₘₒₜₒᵣ numerical values (embodying a relation of stiffness of steering motor torque to steering motor angle in Newton-meters per degree) obtained by linear regression analysis from the data plotted in **FIGS. 6B, 6C,** and **6A** (from left to right), respectively, with an associated table providing a numerical values for each plotted bar in the graph. In absolute value terms, the low-lash condition as shown in **FIG. 6B** and in the leftmost bar in **FIG. 7** exhibits the highest Kₘₒₜₒᵣ value, while the low-lash condition shown in **FIG. 6C** and the rightmost bar in **FIG. 7** exhibits the lowest Kₘₒₜₒᵣ value. The difference between the Kₘₒₜₒᵣ values for the low lash (leftmost bar) and high lash (rightmost bar) in **FIG. 7** may be used as a basis to index a sensed hysteresis relationship between steering motor torque and motor degrees for a vehicle, so that a numerical value may be assigned and then used to adjust a level of steering feedback supplied by the steering motor to a steering wheel of the vehicle.

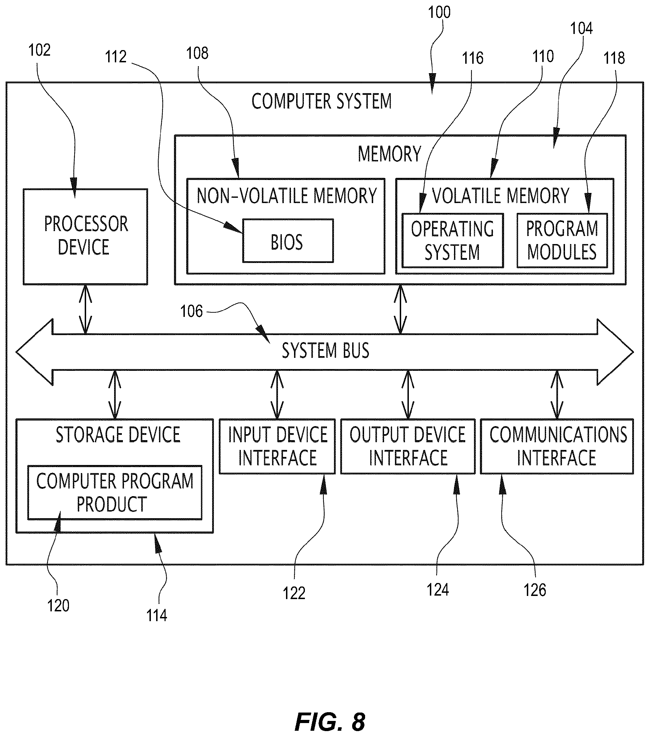

FIG. 8 is a schematic diagram of a generalized representation of a computer system 100 for implementing examples herein (e.g., that can be included as one or more components of a steering control unit 21 or utilized in or by a method for adjusting feedback of a vehicle steering system, according to some examples). The computer system 100 may be adapted to execute instructions from a computer-readable medium to perform these and/or any of the functions or processing described herein. The computer system 100 may be connected (e.g., networked) to other processors or machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102 (e.g., processing circuitry including one or more processor devices or control units), a memory 104, and a system bus 106. The computer system 100 may include at least one computing device having the processing circuitry 102. The system bus 106 provides an interface for system components including, but not limited to, the memory 104 and the processing circuitry 102. The processing circuitry 102 may include any number of hardware components for conducting data or signal processing or for executing computer code stored in memory 104. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 106 may be any of several types of bus structures that may further interconnect to a memory bus (with or without a memory controller), a peripheral bus, and/or a local bus using any of a variety of bus architectures. The memory 104 may be one or more devices for storing data and/or computer code for completing or facilitating methods described herein. The memory 104 may include database components, object code components, script components, or other types of information structure for supporting the various activities herein. Any distributed or local memory device may be utilized with the systems and methods of this description. The memory 104 may be communicably connected to the processing circuitry 102 (e.g., via a circuit or any other wired, wireless, or network connection) and may include computer code for executing one or more processes described herein. The memory 104 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)), or any other medium which can be used to carry or store desired program code in the form of machine-executable instructions or data structures and which can be accessed by a computer or other machine with processing circuitry 102. A basic input/output system (BIOS) 112 may be stored in the non-volatile memory 108 and can include the basic routines that help to transfer information between elements within the computer system 100.

The computer system 100 may further include or be coupled to a non-transitory computer-readable storage medium such as the storage device 114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 114 and/or in the volatile memory 110, which may include an operating system 116 and/or one or more program modules 118. All or a portion of the examples disclosed herein may be implemented as a computer program 120 stored on a transitory or non-transitory computer-usable or computer-readable storage medium (e.g., single medium or multiple media), such as the storage device 114, which includes complex programming instructions (e.g., complex computer-readable program code) to cause the processing circuitry 102 to carry out actions described herein. Thus, the computer-readable program code of the computer program 120 can comprise software instructions for implementing the functionality of the examples described herein when executed by the processing circuitry 102. In some examples, the storage device 114 may be a computer program product (e.g., readable storage medium) storing the computer program 120 thereon, where at least a portion of a computer program 120 may be loadable (e.g., into a processor) for implementing the functionality of the examples described herein when executed by the processing circuitry 102. The processing circuitry 102 may serve as a controller or control system for the computer system 100 that is to implement the functionality described herein.

The computer system 100 may include an input device interface 122 configured to receive input and selections to be communicated to the computer system 100 when executing instructions, such as from a keyboard, mouse, touch-sensitive surface, etc. Such input devices may be connected to the processing circuitry 102 through the input device interface 122 coupled to the system bus 106, but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 124 configured to forward output, such as to a display, a video display unit (e.g., a liquid crystal display (LCD) or a cathode ray tube (CRT)). The computer system 100 may include a communications interface 126 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Concise examples of subject matter disclosed herein are provided hereinafter.

**Example 1:** A computer system comprising processing circuitry configured to: obtain motor angle and estimate motor torque of an electric motor of a steering system of a vehicle in motion; determine a relationship between the estimated motor torque and the obtained motor angle; estimate a steering lash level by comparing the determined relationship to predetermined relationships indicative of lash level; and modify motor torque based on the estimated steering lash level to adjust steering feedback supplied by the electric motor to a steering wheel of the vehicle.

**Example 2:** The computer system of example 1, wherein: the determined relationship comprises a determined hysteresis relationship between the estimated motor torque and the obtained motor angle; and the predetermined relationships indicative of lash level comprise a predetermined high-lash hysteresis relationship and a predetermined low-lash hysteresis relationship.

**Example 3:** The computer system of any one of examples 1 or 2, wherein the comparing of the determined relationship to predetermined relationships indicative of lash level comprises utilizing regression analysis to assign a numerical value indicative of steering lash level corresponding to the determined relationship.

**Example 4:** The computer system of any one of examples 1 to 3, wherein the processing circuitry is configured to estimate motor torque by sensing electric current supplied to the electric motor.

**Example 5:** The computer system of any one of examples 1 to 4, wherein the predetermined relationships indicative of lash level are derived from data obtained from multiple other vehicles.

**Example 6:** The computer system of any one of examples 1 to 5, wherein the processing circuitry is configured to: obtain a speed of the vehicle; compare the obtained speed of the vehicle to a predetermined threshold value; and adjust motor torque to adjust steering feedback supplied by the electric motor only in the event that the obtained speed of the vehicle exceeds the predetermined threshold value.

**Example 7:** The computer system of any one of examples 1 to 6, wherein the vehicle steering system comprises a torque overlay system in which the electric motor is coupled to a hydraulic vehicle steering apparatus.

**Example 8:** The computer system of any one of examples 1 to 7, wherein the processing circuitry is configured to determine the relationship between the estimated motor torque and the obtained motor angle for motor angles within a range not exceeding negative 15 degrees to positive 15 degrees.

**Example 9:** The computer system of any one of examples 1 to 8, wherein the processing circuitry is configured to adjust steering feedback supplied by the electric motor to the steering wheel of the vehicle by reducing torque applied by the electric motor to the steering wheel.

**Example 10:** The computer system of any one of examples 1 to 9, wherein the processing circuitry utilizes a model-based closed loop steering feedback control scheme to adjust steering feedback supplied by the electric motor to the steering wheel of the vehicle.

**Example 11:** A vehicle comprising the computer system of any one of examples 1 to 10.

**Example 12:** A computer-implemented method, comprising: obtaining, by processing circuitry of a computer system, motor angle and estimating, by the processing circuitry, motor torque of an electric motor of a steering system of a vehicle in motion; determining, by the processing circuitry, a relationship between the estimated motor torque and the obtained motor angle; estimating, by the processing circuitry, a steering lash level by comparing the determined relationship to predetermined relationships indicative of lash level; and modifying, by the processing circuitry, motor torque based on the estimated steering lash level to adjust steering feedback supplied by the electric motor to a steering wheel of the vehicle.

**Example 13:** A computer program product comprising program code for performing, when executed by the processing circuitry, the method of example 12.

**Example 14:** A non-transitory computer-readable storage medium comprising instructions, which when executed by processing circuitry, cause the processing circuitry to perform the method of example 12.

**Example 15:** A steering system for a vehicle, the steering system comprising: a steering actuator comprising an electric motor; one or more sensors configured to sense motor angle and to permit estimation of motor torque of the vehicle in motion; and a steering control unit configured to: determine a relationship between the estimated motor torque and the sensed motor angle; estimate steering lash level by comparing the determined relationship to predetermined relationships indicative of lash level; and modify motor torque based on the estimated steering lash level to adjust steering feedback supplied by the electric motor to a steering wheel of the vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
obtain motor angle and estimate motor torque of an electric motor of a steering system of a vehicle in motion;
determine a relationship between the estimated motor torque and the obtained motor angle;
estimate a steering lash level by comparing the determined relationship to predetermined relationships indicative of lash level; and
modify motor torque based on the estimated steering lash level to adjust steering feedback supplied by the electric motor to a steering wheel of the vehicle.

2. The computer system of claim 1, wherein:
the determined relationship comprises a determined hysteresis relationship between the estimated motor torque and the obtained motor angle; and
the predetermined relationships indicative of lash level comprise a predetermined high-lash hysteresis relationship and a predetermined low-lash hysteresis relationship.

3. The computer system of any one of claims 1 or 2, wherein the comparing of the determined relationship to predetermined relationships indicative of lash level comprises utilizing regression analysis to assign a numerical value indicative of steering lash level corresponding to the determined relationship.

4. The computer system of any one of claims 1 to 3, wherein the processing circuitry is configured to estimate motor torque by sensing electric current supplied to the electric motor.

5. The computer system of any one of claims 1 to 4, wherein the predetermined relationships indicative of lash level are derived from data obtained from multiple other vehicles.

6. The computer system of any one of claims 1 to 5, wherein the processing circuitry is configured to:
obtain a speed of the vehicle;
compare the obtained speed of the vehicle to a predetermined threshold value; and
adjust motor torque to adjust steering feedback supplied by the electric motor only in the event that the obtained speed of the vehicle exceeds the predetermined threshold value.

7. The computer system of any one of claims 1 to 6, wherein the vehicle steering system comprises a torque overlay system in which the electric motor is coupled to a hydraulic vehicle steering apparatus.

8. The computer system of any one of claims 1 to 7, wherein the processing circuitry is configured to determine the relationship between the estimated motor torque and the obtained motor angle for motor angles within a range not exceeding negative 15 degrees to positive 15 degrees.

9. The computer system of any one of claims 1 to 8, wherein the processing circuitry is configured to adjust steering feedback supplied by the electric motor to the steering wheel of the vehicle by reducing torque applied by the electric motor to the steering wheel.

10. The computer system of any one of claims 1 to 9, wherein the processing circuitry utilizes a model-based closed loop steering feedback control scheme to adjust steering feedback supplied by the electric motor to the steering wheel of the vehicle.

11. A vehicle comprising the computer system of any one of claims 1 to 10.

12. A computer-implemented method, comprising:
obtaining, by processing circuitry of a computer system, motor angle and estimating, by the processing circuitry, motor torque of an electric motor of a steering system of a vehicle in motion;
determining, by the processing circuitry, a relationship between the estimated motor torque and the obtained motor angle;
estimating, by the processing circuitry, a steering lash level by comparing the determined relationship to predetermined relationships indicative of lash level; and
modifying, by the processing circuitry, motor torque based on the estimated steering lash level to adjust steering feedback supplied by the electric motor to a steering wheel of the vehicle.

13. A computer program product comprising program code for performing, when executed by the processing circuitry, the method of claim 12.

14. A non-transitory computer-readable storage medium comprising instructions, which when executed by processing circuitry, cause the processing circuitry to perform the method of claim 12.

15. A steering system for a vehicle, the steering system comprising:
a steering actuator comprising an electric motor;
one or more sensors configured to sense motor angle and to permit estimation of motor torque of the vehicle in motion; and
a steering control unit configured to:
determine a relationship between the estimated motor torque and the sensed motor angle;
estimate steering lash level by comparing the determined relationship to predetermined relationships indicative of lash level; and
modify motor torque based on the estimated steering lash level to adjust steering feedback supplied by the electric motor to a steering wheel of the vehicle.
